# EUROPEAN PATENT SPECIFICATION

(11) **EP 3 396 969 B1**
(45) Date of publication and mention of the grant of the patent: **23.12.2020**
(21) Application number: 17192081.2
(22) Date of filing: 20.09.2017
(51) Int. Cl.: H04N 21/61, H04B 1/40, H04B 1/18

(54) **MULTI-CHIP CONNECTION CIRCUIT**
MULTICHIP-VERBINDUNGSSCHALTUNG
MULTI-CHIP CONNECTION CIRCUIT

(30) Priority: 25.04.2017 CN 201710276063
(43) Date of publication of application: 31.10.2018
(73) Proprietor: ALi Corporation, Hsinchu City 300 (TW)
(72) Inventor: LI, Jian-Xin, Shanghai 200233 (CN); Eichrodt, Christian, 1228 Plan-Les-Ouates, Geneva (CH); LI, Han-jun, Shanghai 200233 (CN); Epifano, Fabio, 1228 Plan-Les-Ouates, Geneva (CH)
(74) Representative: 2K Patentanwälte Blasberg Kewitz & Reichel

(56) References cited:
- CN-U- 205 901 949
- US-A1- 2015 056 941

## Description

### BACKGROUND OF THE INVENTION

### Field of the Invention

The invention relates to a circuit in which a plurality of chips connect to each other, and particularly relates to a multi-chip connection circuit with a wireless communication function.

### Description of Related Art

Along with development of Internet of things technology, application fields of electronic apparatuses with a wireless communication function become increasingly wider, for example, various fields such as vehicle electronics, medical electronics, wearable electronics, home appliances, etc. Regarding the electronic apparatuses, the demand on the wireless communication function becomes higher. For example, more and more electronic apparatuses are required to have a WiFi function, so as to use the WiFi function to implement data transmission or device control, etc. Therefore, how to integrate electronic components executing the wireless communication function with a master chip of the electronic apparatus is an important issue concerned by related technicians.

In a conventional system-on-a-chip (SoC), a plurality of components, for example, a dynamic random access memory (DRAM), a flash memory, a logic circuit, a radio frequency (RF) device, etc., can be integrated in a single chip. Although the aforementioned method may improve functionality and electrical function thereof, since manufacturing methods and selection of manufacturing process of those different functional components have respective considerations, the complexity and difficulty in design and verification thereof are very high.

Moreover, in another solution, by connecting a wireless communication chip card having a universal serial bus (USB) interface or a peripheral component interface express (PCIE) interface with the SoC of the electronic apparatus, the electronic apparatus is able to have the wireless communication function. However, the wireless communication chip card and the SoC of the above solution cannot share a same RAM, and it is required to additionally install the USB interface or the PCIE interface used for connecting the wireless communication chip card and the electronic apparatus, which causes increase of the manufacturing cost. Moreover, in another solution, a chip designer may integrate a digital circuit and an analog-to-digital converter/digital-to-analog converter of the wireless communication circuit into the SoC, and independently pull out an analog front-end circuit from the wireless communication circuit. However, an analog signal transmission interface used for connecting the analog-to-digital converter/digital-to-analog converter in the SoC and the analog front-end circuit in the above solution is very easy to produce an electromagnetic interference (EMI) phenomenon, which may decrease the signal transmission quality.

CN 205901949 U discloses a signal transmission device, including a transmitting terminal and a receiving terminal. The transmitting terminal and the receiving terminal communicate with each other through a wireless radio technique, such as WIFI, and the distance from the transmitting terminal to the receiving terminal may be as far as 1 km. The transmitting terminal and the receiving terminal are disposed in two separated electronic devices respectively configured for transmitting the video data and receiving the video data, but not on the same substrate.

US 2015/056941 A1 discloses an RF front-end system including one or more RF front-end components and a programmable logic device, which has a baseband interface for coupling to a baseband digital signal processor (DSP), and a set of component interfaces for coupling to the one or more RF front-end components. The RF front-end block includes BPF, PA or LNA which are configured for filtering and amplifying the analog signal. However, the RF front-end block is outside the RF-IC including DAC/ADC. Hence, at least one more additional connection interface(s) is/are necessary for connecting the RF front-end block and the RF-IC including DAC/ADC to the baseband chip.

### SUMMARY OF THE INVENTION

The scope of protection is defined in the appended claims. It is an object of the present invention to provide an enhanced multi-chip connection circuit suited for reducing the complexity and costs and efforts required for design and verification to thereby overcome at least partially the above drawbacks of conventional solutions.

This problem is solved by a multi-chip connection circuit as claimed by claim 1. Further advantageous embodiments are the subject-matter of the dependent claims.

According to the invention the multi-chip connection circuit having a wireless communication function is adapted to greatly decrease manufacturing cost and effectively mitigate an electromagnetic interference (EMI) phenomenon.
According to the invention there is provided a multi-chip connection circuit, which includes a system-on-a-chip (SoC) and a radio frequency (RF) chip. The SoC includes a digital baseband circuit and a first transmission interface, and the digital baseband circuit is used for transceiving and processing digital data. The first transmission interface is coupled to the digital baseband circuit, and receives or transmits the digital data according to a high speed serial input/output standard. The RF chip includes a second transmission interface and a RF chain module, and the second transmission interface is coupled to the first transmission interface of the SoC and transceives the digital data. The RF chain module is coupled to the second transmission interface, and converts the digital data into a sending analog signal, or converts a receiving analog signal into the digital data. The system-on-a-chip and the radio frequency chip are disposed on the same circuit substrate, and the first transmission interface and the second transmission interface are connected through a transmission conductor on the circuit substrate. The second transmission interface transmits the digital data to the digital baseband circuit or receives the digital data from the digital baseband circuit through the first transmission interface. The radio frequency chain module comprises: a digital-to-analog converter (DAC), converting the digital data into the sending analog signal; an analog-to-digital converter (ADC), sampling the receiving analog signal to generate the digital data; and a transceiver, coupled to the digital-to-analog converter and the analog-to-digital converter, and performing filtering and power amplification to the sending analog signal or the receiving analog signal.

In an embodiment of the invention, the RF chip is coupled to an antenna, and sends the sending analog signal or receives the receiving analog signal through the antenna.

In an embodiment of the invention, the sending analog signal and the receiving analog signal are complied with a wireless fidelity (WiFi) standard, and the first transmission interface and the second transmission interface are serializer/deserializer (SERDES) interfaces supporting the high speed serial input/output standard.

In an embodiment of the invention, the RF chain module includes a digital-to-analog converter (DAC), an analog-to-digital converter (ADC) and a transceiver. The DAC converts the digital data into the sending analog signal, and the ADC samples the receiving analog signal to generate the digital data. The transceiver is coupled to the DAC and the ADC, and performs filtering and power amplification to the sending analog signal or the receiving analog signal.

In an embodiment of the invention, the SoC further includes another first transmission interface. The digital baseband circuit is connected to another second transmission interface of another RF chip through the another first transmission interface. The another RF chip includes another second transmission interface and another RF chain module. The another second transmission interface is coupled to the first transmission interface, and transceives the digital data. The another RF chain module is coupled to the another second transmission interface, and converts the digital data into another sending analog signal, or converts another receiving analog signal into the digital data.

In an embodiment of the invention, the RF chip is coupled to the antenna, the sending analog signal and the receiving analog signal are transmitted through the antenna. The another RF antenna is coupled to another antenna, and the another sending analog signal and the another receiving analog signal are transmitted through the another antenna.

According to the above description, in the embodiment of the invention, the digital baseband circuit of the wireless communication system is integrated in the SoC, and the RF chain module of the wireless communication system is individually packaged in the RF chip. Moreover, the SoC integrated with the digital baseband circuit is connected to the RF chip through a high speed serializer/deserializer interface to transmit the digital data. In this way, the manufacturing cost is greatly decreased under the situation of ameliorating the EMI phenomenon and electromagnetic tolerance, and a development time of the SoC is decreased.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of a multi-chip connection circuit according to an embodiment of the invention.
FIG. 2 is a schematic diagram of a multi-chip connection circuit according to an embodiment of the invention.
FIG. 3 is a schematic diagram of a multi-chip connection circuit according to an embodiment of the invention.
FIG. 4 is a schematic diagram of a multi-chip connection circuit disposed on a circuit board according to an embodiment of the invention.

### DESCRIPTION OF EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

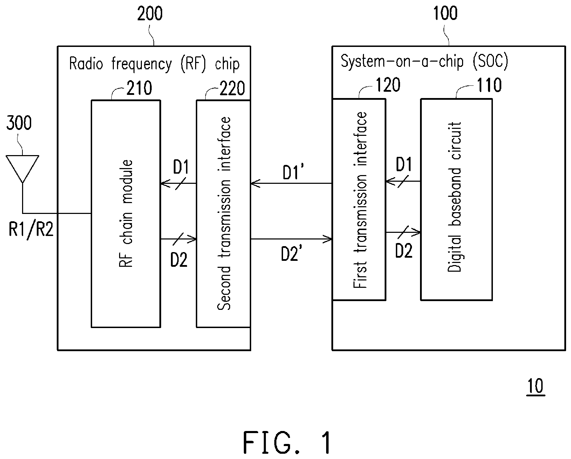

FIG. 1 is a schematic diagram of a multi-chip connection circuit according to an embodiment of the invention. Referring to FIG. 1, the multi-chip connection circuit 10 includes a system-on-a-chip (SoC) chip 100 and a radio frequency (RF) chip 200. The SoC 100 is a packaged integrated circuit that integrates all components of an electronic systems, and the SoC 100 may include a processor, a memory and peripheral circuits, etc., which is not limited by the invention.

In the present embodiment, the SoC 100 includes a digital baseband circuit 110 and a first transmission interface 120. The digital baseband circuit 110 may perform operations such as compressing/decompressing, frequency encoding/decoding, encryption/decryption, modulation/demodulation, etc., to a digital signal. In the present embodiment, the digital baseband circuit 110 is configured to transceive and process digital data. For example, the digital baseband circuit 110 may use an internal digital signal processing (DSP) module (not shown) to perform digital data processing. For example, the digital baseband circuit 110 may process data to generate digital data D1, and transmits the digital data D1 to an external chip (for example, the RF chip 200 in FIG. 1) through the first transmission interface 120. The digital baseband circuit 110 may also receive digital data D2 through the first transmission interface 120 and perform digital data processing to the digital data D2. Moreover, the digital baseband circuit 110 may connect to a random access memory (not shown) in the SoC 100 through a memory connection interface such as a multi-layer advanced high-performance bus (AHB) or a multi-layer advanced eXtensible interface (AXI), etc.

The first transmission interface 120 is coupled to the digital baseband circuit 110, and receives or sends digital data D1'/D2' according to a high speed serial input/output standard. The first transmission interface 120 may include a serializer/deserializer, which is able to convert a low speed parallel signal into a high speed serial signal. Further, the first transmission interface 120 may convert the parallel digital data D1 output by the digital baseband circuit 110 into serial digital data D1' according to the high speed serial input/output standard, and sends the serial digital data D1' out to external of the SoC 100. In the present embodiment, the serial digital data D1' can be sent to a second transmission interface 220 of the RF chip 200. Moreover, the first transmission interface 120 may receive serial digital data D2' from external of the SoC 100, and converts the serial digital data D2' into parallel digital data D2 according to the high speed serial input/output standard. And then the parallel digital data D2 is sent to the digital baseband circuit 110. In the present embodiment, the external serial digital data D2' is provided by the second transmission interface 220 of the RF chip 200.

The RF chip 200 includes the second transmission interface 220 and a RF chain module 210. The second transmission interface 220 is coupled to the first transmission interface 120 of the SoC 100 and transceives the serial digital data D1'/D2'. Similarly, the second transmission interface 220 may include a serializer and a deserializer, which is able to convert a low speed parallel signal into a high speed serial signal. In the present embodiment, the second transmission interface 220 receives the digital data D1 output by the digital baseband circuit 110 through the first transmission interface 120 according to the high speed serial input/output standard, or outputs the digital data D2 to the digital baseband circuit 110 through the first transmission interface 120 according to the high speed serial input/output standard.

The RF chain module 210 is coupled to the second transmission interface 220, and converts the digital data D1 into a sending analog signal R1, or converts a receiving analog signal R2 into the digital data D2. The RF chip 200 is coupled to an antenna 300, and sends the sending analog signal R1 or receives the receiving analog signal R2 through the antenna 300. The RF chain module 210 is used for processing a high frequency electromagnetic signal and executing digital-to-analog/analog-to-digital conversion. In an embodiment, the sending analog signal R1 and the receiving analog signal R2 may be complied with a wireless fidelity (WiFi) standard.

In the present embodiment, when the SoC 100 desires to use wireless communication function to receive external data, the high frequency receiving analog signal R2 is received through the antenna 300, and the RF chain module 210 may perform analog signal processing to the receiving analog signal R2 and then convert the receiving analog signal R2 to the digital data D2. The RF chip 200 then transmits the digital data D2 to the digital baseband circuit 110 through the second transmission interface 220 and the first transmission interface 120. Moreover, when the SoC 100 desires to use the wireless communication function to send data, the digital data D1 generated by the digital baseband circuit 110 can be transmitted to the RF chain module 210 through the first transmission interface 120 and the second transmission interface 220. The RF chain module 210 converts the digital data D1 into an analog signal, and performs analog signal processing to generate the sending analog signal R1, and then the high frequency sending analog signal R1 is sent through the antenna 300.

It should be noted that at least the RF chain module 210 and the digital baseband circuit 110 are required to execute the wireless communication function. The RF chain module 210 only includes an analog circuit without including a digital circuit. The digital baseband circuit 110 only includes a digital circuit without including an analog circuit. In other words, in the multi-chip connection circuit 10 of the invention, all of the analog circuits and all of the digital circuits required for supporting or executing the wireless communication function are respectively disposed in different chips. For example, the analog circuits are all disposed in the RF chip 200, and the digital circuits are all disposed in the SoC 100. In a semiconductor process technique, verification of the analog circuit in a chip is generally more complex than verification of the digital circuit, and development of the digital circuit is generally quicker than development of the analog circuit. For example, in the SoC 100, a core processor (a digital circuit) is probably revised every six months, and an analog circuit part used for supporting the wireless communication function (for example, the RF chain module 210) is probably revised every several years. Therefore, through the configuration of separating the analog circuits and the digital circuits, when the SoC 100 uses an advanced process technique, in verification of the wireless communication function, a designer is only required to consider verification of the digital circuit without considering verification of the analog circuit. Namely, only revision of the SoC chip 100 is required to be considered without considering revision and versification of the RF chip 200, by which device cost is decreased and a development time is shortened.

In an embodiment, the first transmission interface 120 and the second transmission interface 220 are serializer/deserializer (SERDES) interfaces supporting the high speed serial input/output standard, and the high speed serial input/output standard is, for example, a JED204b standard, though the invention is not limited thereto. It should be noted that by connecting the packaged RF chip 200 and the packaged SoC 100 through the SERDES interfaces, the digital baseband circuit 110 and the RF chain module 210 can be connected and transmit digital data D1'/D2' through the SERDES interfaces, so that the EMI phenomenon and the electromagnetic tolerance can be ameliorated based on a characteristic that the SERDES interfaces transmit low voltage differential signals.

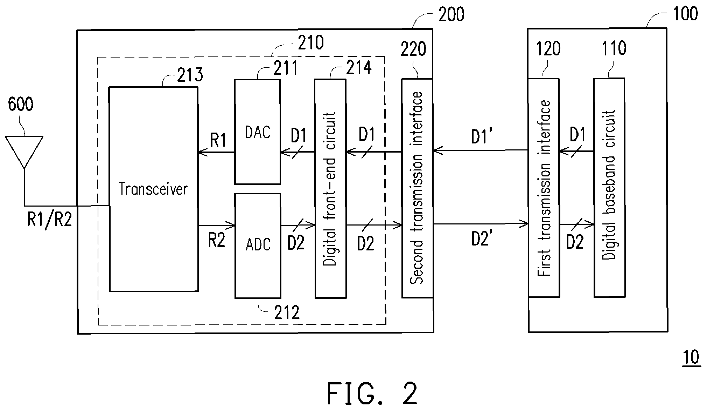

FIG. 2 is a schematic diagram of a multi-chip connection circuit according to an embodiment of the invention. Referring to FIG. 2, the RF chain module 210 may include a digital-to-analog converter (DAC) 211, an analog-to-digital converter (ADC) 212, a transceiver 231 and a digital front-end circuit 214.

The digital front-end circuit 214 is coupled between the second transmission interface 220 and the DAC 211 and the ADC 212, and is configured to perform digital signal processing, and the digital signal processing is, for example, digital up conversion (DUC), digital down conversion (DDC), digital pre-distortion, and crest factor reduction

(CFR), etc. The DAC 211 is used for converting the digital data D1 into the sending analog signal R1, and the ADC 212 samples the receiving analog signal R2 to generate the digital data D2. In other words, the ADC 212 is configured to convert the receiving analog signal R2 of an analog signal format into the digital data D2 of a digital signal format during a period that the SoC 100 receives data, and the DAC 211 converts the digital data D1 of the digital signal format into the sending analog signal R1 of the analog signal format during a period that the SoC 100 sends data.

The transceiver 213 is coupled to the DAC 211 and the ADC 212, and performs filtering and power amplification to the sending analog signal R1 or the receiving analog signal R2. For example, the transceiver 213 may execute operations such as low noise amplification, impedance matching, frequency mixing, frequency up-conversion, frequency down-conversion, filtering, amplifying, etc. For example, the transceiver 213 may include an amplifier, a mixer, an oscillator, a filter, etc. It is assumed that the multi-chip connection circuit 10 has the WiFi function, the digital baseband circuit 110 may produce the digital data D1 according to a media access layer standard of the WiFi protocol, and the RF chain module 210 may convert the digital data D1 into a high frequency analog signal within an operation frequency band specified by the WiFi protocol. Moreover, the RF chain module 210 may receive a high frequency analog signal within the operation frequency band specified by the WiFi protocol through the antenna 300, and the digital baseband circuit 110 may process the digital data D2 according to the media access layer standard of the WiFi protocol. In this way, a processing core of the SoC 100 may communicate with external through the WiFi function.

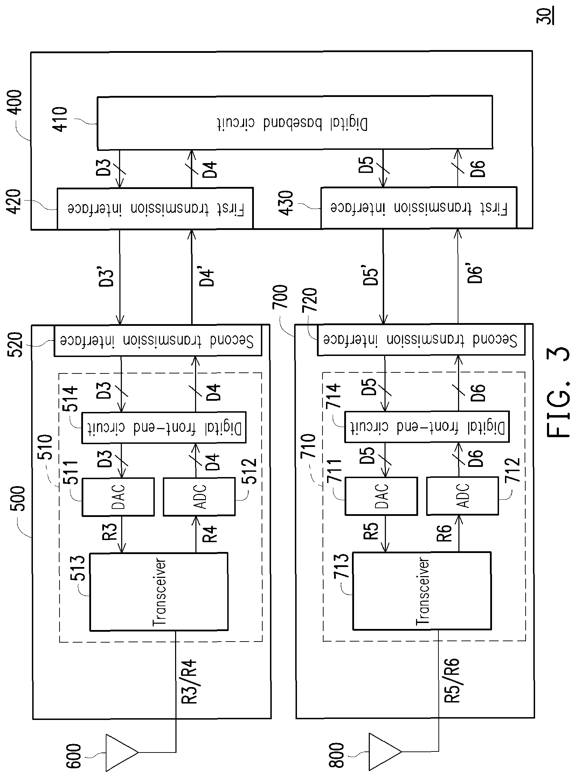

FIG. 3 is a schematic diagram of a multi-chip connection circuit according to an embodiment of the invention. Referring to FIG. 3, in a multi-input multi-output (MIMO) wireless communication system, a SoC 400 may transceive signals through a plurality of antennas. In FIG. 3, two antennas are taken as an example for description, though the invention is not limited thereto.

The multi-chip connection circuit 30 includes the SoC 400, a RF chip 500 and a RF chip 700. The SoC 400 includes a digital baseband circuit 410, a first transmission interface 420 and another first transmission interface 430. The digital baseband circuit 410 is connected to a second transmission interface 520 of the RF chip 500 through the first transmission interface 420, and is connected to a second transmission interface 720 of the RF chip 700 through the first transmission interface 430. The RF chip 500 includes the second transmission interface 520 and a RF chain module 510, and the RF chip 700 includes the second transmission interface 720 and a RF chain module 710.

The SoC 400 is similar to the SoC 100 of FIG. 2, and a difference there between is that the SoC 400 has two first transmission interfaces 420 and 430. Since the SoC 400 has two first transmission interfaces 420 and 430, the SoC 400 can be connected to two RF chips 500 and 700, so as to transceive signals through antennas 600 and 800.

However, the data transmission method between the digital baseband circuit 410 and the RF chain modules 510 and 710 has been described in detail in the embodiment of FIG. 2, and details thereof are not repeated. In brief, the first transmission interface 420 converts the parallel digital data D3 into serial digital data D3', and transmits the serial digital data D3' to the second transmission interface 520. The first transmission interface 430 converts the parallel digital data D5 into serial digital data D5', and transmits the serial digital data D5' to the second transmission interface 720. The second transmission interface 520 converts the serial digital data D3' into parallel digital data D3, and the RF chain module 510 performs digital-to-analog conversion to the digital data D3 to generate a sending analog signal R3. The second transmission interface 720 converts the serial digital data D5' into parallel digital data D5, and the RF chain module 710 performs digital-to-analog conversion to the digital data D5 to generate a sending analog signal R5. The RF chain module 510 performs analog-to-digital conversion to a receiving analog signal R4 received by the antenna 600 to generate digital data D4, and the second transmission interface 520 converts the parallel digital data D4 into serial digital data D4', and the first transmission interface 420 receives the serial digital data D4' and generates parallel digital data D4 to the digital baseband circuit 410. The RF chain module 710 performs analog-to-digital conversion to a receiving analog signal R6 received by the antenna 800 to generate digital data D6, and the second transmission interface 720 converts the parallel digital data D6 into serial digital data D6', and the first transmission interface 430 receives the serial digital data D6' and generates parallel digital data D6 to the digital baseband circuit 410.

Therefore, when manufacturing the SoC 400, as long as more first transmission interfaces connected to the digital baseband circuit is additionally configured in the SoC 400, the SoC 400 can be simultaneously applied to a single antenna system or a multi-antenna system, such that an application range of the SoC 400 can be greatly increased. Compared to the conventional design of integrating all of the devices with the wireless communication function to the SoC, the configuration of the multi-chip connection circuit of the invention is more flexible under the consideration of cost saving.

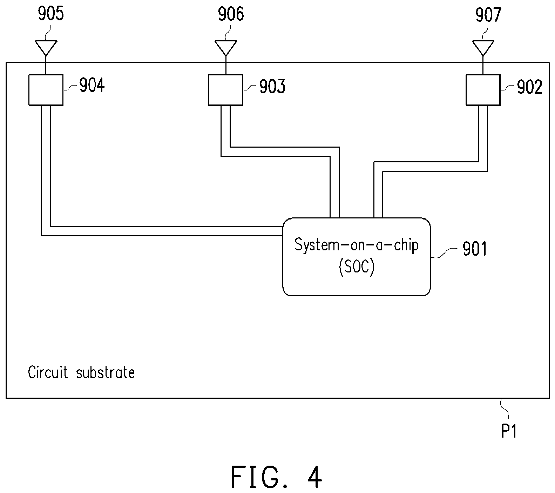

FIG. 4 is a schematic diagram of a multi-chip connection circuit disposed on a circuit board according to an embodiment of the invention. Referring to FIG. 4, the multi-chip connection circuit including three RF chips is taken as an example for description, though the invention is not limited thereto. In the embodiment of FIG. 4, the SoC 901 can be respectively connected to RF chips 902, 903 and 904 through the SERDES interfaces supporting the JED204b standard. In brief, compared to the embodiment of FIG. 3, the SoC 901 may include three first transmission interfaces for respectively connecting the respective second transmission interfaces of the three RF chips 902, 903 and 904. The SoC 901 and the RF chips 902, 903 and 904 are all disposed on the circuit substrate P1, and the first transmission interfaces of the SoC 901 are connected to the second transmission interfaces of the RF chips 902, 903 and 904 through transmission conductors on the circuit substrate P1. To be specific, pins or pads of the SoC 901 and pins or pads of the RF chips 902, 903 and 904 can be welded on metal pads of the circuit substrate P1, and are electrically connected through metal wiring on the circuit substrate P1.

It should be noted that when various components on the circuit substrate P1 are arranged, the RF chips 902, 903 and 904 may be arranged to be close to antennas 905, 906 and 907 as close as possible, so as to avoid a situation that high frequency analog signals transmitted between the RF chips 902, 903 and 904 and the antennas 905, 906 and 907 are interfered by other signals or interfere other signals. Compared to the conventional design of integrating all of the devices with the wireless communication function to the SoC, the configuration of the multi-chip connection circuit of the present embodiment may ameliorate the EMI phenomenon and electromagnetic tolerance.

In summary, in the embodiment of the invention, the digital baseband circuit of the wireless communication structure is integrated in the SoC, such that the digital baseband circuit may share a memory with other devices in the SoC. Moreover, the amplifier, the transceiver, the DAC, the ADC and the digital front-end circuit in the wireless communication structure can be independently packaged as one RF chip, and the SERDES interfaces can be adopted to connect the digital baseband circuit in the SoC and the RF chips. In this way, based on the characteristic that the SERDES interfaces transmit the low voltage differential signals, the multi-chip connection circuit of the invention may further ameliorate the EMI phenomenon and electromagnetic tolerance compared to the conventional structure. Besides, since the SoC is only integrated with the digital baseband circuit and added with the SERDES interfaces, the cost of the SoC can be greatly decreased, and the application range thereof can be wider under the premise of effective cost control.

## Claims

1. A multi-chip connection circuit (10, 30), comprising:
a system-on-a-chip (100, 400, 901), comprising:
a digital baseband circuit (110, 410), configured to transceive and process digital data; and
a first transmission interface (120, 420, 430), coupled to the digital baseband circuit (110, 410), and receiving or transmitting the digital data according to a high speed serial input/output standard; and
a radio frequency chip (200, 500, 700, 902, 903, 904), comprising:
a second transmission interface (220, 520, 720), coupled to the first transmission interface (120, 420, 430), and transceiving the digital data; and
a radio frequency chain module (210, 510, 710), coupled to the second transmission interface (220, 520, 720), and converting the digital data into a sending analog signal, or converting a receiving analog signal into the digital data;
wherein the system-on-a-chip (100, 400, 901) and the radio frequency chip (200, 500, 700, 902, 903, 904) are disposed on the same circuit substrate (P1), and the first transmission interface (120, 420, 430) and the second transmission interface (220, 520, 720) are connected through a transmission conductor on the circuit substrate (P1), wherein
the second transmission interface (220, 520, 720) transmits the digital data to the digital baseband circuit (110, 410) or receives the digital data from the digital baseband circuit (110, 410) through the first transmission interface, and
the radio frequency chain module (210, 510, 710) comprises:
a digital-to-analog converter (211, 511, 711), converting the digital data into the sending analog signal;
an analog-to-digital converter (212, 512, 712), sampling the receiving analog signal to generate the digital data; and
a transceiver (213, 513, 713), coupled to the digital-to-analog converter (211, 511, 711) and the analog-to-digital converter (212, 512, 712), and performing filtering and power amplification to the sending analog signal or the receiving analog signal.

2. The multi-chip connection circuit as claimed in claim 1, wherein the radio frequency chip (200, 500, 700, 902, 903, 904) is coupled to an antenna (300, 600, 800, 905, 906, 907), and configured to send the sending analog signal or receive the receiving analog signal through the antenna (300, 600, 800, 905, 906, 907).

3. The multi-chip connection circuit as claimed in claim 1 or 2, wherein the sending analog signal and the receiving analog signal are complied with a wireless fidelity (WiFi) standard, and the first transmission interface (120, 420, 430) and the second transmission interface (220, 520, 720) are serializer/deserializer (SERDES) interfaces supporting the high speed serial input/output standard.

4. The multi-chip connection circuit as claimed in any of the preceding claims, wherein all of analog circuits required for supporting the wireless fidelity standard are disposed in the radio frequency chip (200, 500, 700, 902, 903, 904), and all of digital circuits required for supporting the wireless fidelity standard are disposed in the system-on-a-chip (100, 400, 901).

5. The multi-chip connection circuit as claimed in any of the preceding claims, wherein the system-on-a-chip (100, 400, 901) further comprising another first transmission interface (120, 420, 430), the digital baseband circuit (110, 410) is connected to another second transmission interface (220, 520, 720) of another radio frequency chip (200, 500, 700, 902, 903, 904) through the another first transmission interface (120, 420, 430), and the another radio frequency chip (200, 500, 700, 902, 903, 904) comprises:
the another second transmission interface (220, 520, 720), coupled to the first transmission interface (120, 420, 430), and transceiving the digital data; and
another radio frequency chain (200, 500, 700, 902, 903, 904) module, coupled to the another second transmission interface (220, 520, 720), and converting the digital data into another sending analog signal, or converting another receiving analog signal into the digital data.

6. The multi-chip connection circuit as claimed in claim 5, wherein the radio frequency chip (200, 500, 700, 902, 903, 904) is coupled to an antenna (300, 600, 800, 905, 906, 907), the sending analog signal and the receiving analog signal are transmitted through the antenna (300, 600, 800, 905, 906, 907), the another radio frequency chain (200, 500, 700, 902, 903, 904) is coupled to another antenna (300, 600, 800, 905, 906, 907), and the another sending analog signal and the another receiving analog signal are transmitted through the another antenna (300, 600, 800, 905, 906, 907).

## Patentansprüche

1. Multi-Chip-Verbindungsschaltung (10, 30), umfassend:
einen System-on-a-Chip (100, 400, 901), umfassend:
eine digitale Basisbandschaltung (110, 410), die ausgelegt ist, um digitale Daten zu übertragen und zu verarbeiten; und
eine erste Übertragungsschnittstelle (120, 420, 430), die mit der digitalen Basisbandschaltung (110, 410) gekoppelt ist und die digitalen Daten gemäß einem seriellen Hochgeschwindigkeits-Eingabe-/Ausgabestandard empfängt oder überträgt; und
einen Hochfrequenz-Chip (200, 500, 700, 902, 903, 904), umfassend:
eine zweite Übertragungsschnittstelle (220, 520, 720), die mit der ersten Übertragungsschnittstelle (120, 420, 430) gekoppelt ist und die digitalen Daten sendet und empfängt; und
ein Hochfrequenz-Kettenmodul (210, 510, 710), das mit der zweiten Übertragungsschnittstelle (220, 520, 720) gekoppelt ist und die digitalen Daten in ein analoges Sendesignal umwandelt oder ein analoges Empfangssignal in die digitalen Daten umwandelt;
wobei der System-on-a-Chip (100, 400, 901) und der Hochfrequenz-Chip (200, 500, 700, 902, 903, 904) auf demselben Schaltungssubstrat (P1) angeordnet sind, und die erste Übertragungsschnittstelle (120, 420, 430) und die zweite Übertragungsschnittstelle (220, 520, 720) über einen Übertragungsleiter auf dem Schaltungssubstrat (P1) verbunden sind, wobei
die zweite Übertragungsschnittstelle (220, 520, 720) die digitalen Daten an die digitale Basisbandschaltung (110, 410) überträgt oder die digitalen Daten von der digitalen Basisbandschaltung (110, 410) über die erste Übertragungsschnittstelle empfängt, und
das Radiofrequenz-Kettenmodul (210, 510, 710) umfasst:
einen Digital/Analog-Wandler (211, 511, 711), der die digitalen Daten in das analoge Sendesignal umwandelt;
einen Analog-Digital-Wandler (212, 512, 712), der das analoge Empfangssignal abtastet, um die digitalen Daten zu erzeugen; und
einen Transceiver (213, 513, 713), der mit dem Digital-Analog-Wandler (211, 511, 711) und dem Analog-Digital-Wandler (212, 512, 712) gekoppelt ist und eine Filterung und Leistungsverstärkung für das analoge Sendesignal oder das analoge Empfangssignal durchführt.

2. Multi-Chip-Verbindungsschaltung nach Anspruch 1, wobei der Hochfrequenz-Chip (200, 500, 700, 902, 903, 904) mit einer Antenne (300, 600, 800, 905, 906, 907) gekoppelt und so ausgelegt ist, dass dieser das analoge Sendesignal über die Antenne (300, 600, 800, 905, 906, 907) sendet oder das analoge Empfangssignal über die Antenne (300, 600, 800, 905, 906, 907) empfängt.

3. Multi-Chip-Verbindungsschaltung nach Anspruch 1 oder 2, wobei das analoge Sendesignal und das analoge Empfangssignal einem Wireless Fidelity (WiFi)-Standard entsprechen und die erste Übertragungsschnittstelle (120, 420, 430) und die zweite Übertragungsschnittstelle (220, 520, 720) Serializer/Deserializer (SERDES)-Schnittstellen sind, die den Hochgeschwindigkeits-Eingabe-/Ausgabestandard unterstützen.

4. Multi-Chip-Verbindungsschaltung nach einem der vorhergehenden Ansprüche, wobei sämtliche analogen Schaltungen, die zur Unterstützung des Wireless Fidelity-Standards erforderlich sind, in dem Hochfrequenz-Chip (200, 500, 700, 902, 903, 904) angeordnet sind, und wobei sämtliche digitalen Schaltungen, die zur Unterstützung des Wireless Fidelity-Standards erforderlich sind, in dem System-on-a-Chip (100, 400, 901) angeordnet sind.

5. Multi-Chip-Verbindungsschaltung nach einem der vorhergehenden Ansprüche, wobei das System-on-a-Chip (100, 400, 901) weiterhin eine weitere erste Übertragungsschnittstelle (120, 420, 430) umfasst, die digitale Basisbandschaltung (110, 410) über die andere erste Übertragungsschnittstelle (120, 420, 430) mit einer weiteren zweiten Übertragungsschnittstelle (220, 520, 720) eines anderen Hochfrequenz-Chips (200, 500, 700, 902, 903, 904) verbunden ist, und der andere Hochfrequenz-Chip (200, 500, 700, 902, 903, 904) umfasst:
die weitere zweite Übertragungsschnittstelle (220, 520, 720), die mit der ersten Übertragungsschnittstelle (120, 420, 430) gekoppelt ist und die digitalen Daten sendet und empfängt; und
ein weiteres Hochfrequenz-Kettenmodul (200, 500, 700, 902, 903, 904), das mit einer weiteren zweiten Übertragungsschnittstelle (220, 520, 720) gekoppelt ist und die digitalen Daten in ein weiteres analoges Sendesignal umwandelt oder ein weiteres analoges Empfangssignal in die digitalen Daten umwandelt.

6. Multichip-Verbindungsschaltung nach Anspruch 5, wobei der Hochfrequenz-Chip (200, 500, 700, 902, 903, 904) mit einer Antenne (300, 600, 800, 905, 906, 907) gekoppelt ist, das analoge Sendesignal und das analoge Empfangssignal durch die Antenne (300, 600, 800, 905, 906, 907) übertragen werden, das weitere Hochfrequenz-Kettenmodul (200, 500, 700, 902, 903, 904) mit einer anderen Antenne (300, 600, 800, 905, 906, 907) gekoppelt ist, und das weitere analoge Sendesignal und das weitere analoge Empfangssignal über die weitere Antenne (300, 600, 800, 905, 906, 907) übertragen werden.

## Revendications

1. Un circuit de connexion multi-puces (10, 30), comprenant:
un système sur puce (100, 400, 901), comprenant:
un circuit en bande de base numérique (110, 410), configuré pour transmettre/recevoir et traiter des données numériques; et
une première interface de transmission (120, 420, 430), couplée au circuit en bande de base numérique (110, 410), et recevant ou transmettant les données numériques selon une norme d'entrée/sortie série à grande vitesse; et
une puce radiofréquence (200, 500, 700, 902, 903, 904), comprenant:
une seconde interface de transmission (220, 520, 720), couplée à la première interface de transmission (120, 420, 430), et émettant et recevant les données numériques; et
un module de chaîne de radiofréquence (210, 510, 710), couplé à la seconde interface de transmission (220, 520, 720), et convertissant les données numériques en un signal analogique d'émission, ou convertissant un signal analogique de réception en données numériques ;
dans lequel le système sur puce (100, 400, 901) et la puce radiofréquence (200, 500, 700, 902, 903, 904) sont disposés sur le même substrat de circuit (P1), et la première interface de transmission (120, 420, 430) et la seconde interface de transmission (220, 520, 720) sont connectées via un conducteur de transmission sur le substrat de circuit (P1) ;
dans lequel
la seconde interface de transmission (220, 520, 720) transmet les données numériques au circuit de bande de base numérique (110, 410) ou reçoit les données numériques du circuit de bande de base numérique (110, 410) via la première interface de transmission, et
le module de chaîne radio-fréquence (210, 510, 710) comporte :
un convertisseur numérique/analogique (211, 511, 711), convertissant les données numériques en signal analogique d'envoi ;
un convertisseur analogique/numérique (212, 512, 712), échantillonnant le signal analogique reçu pour générer les données numériques ; et
un émetteur/récepteur (213, 513, 713), couplé au convertisseur numérique/analogique (211, 511, 711) et au convertisseur analogique/numérique (212, 512, 712), et effectuant du filtrage et de l'amplification de puissance sur le signal analogique d'envoi ou le signal analogique reçu.

2. Le circuit de connexion multi-puces tel que revendiqué dans la revendication 1, dans lequel la puce radiofréquence (200, 500, 700, 902, 903, 904) est couplée à une antenne (300, 600, 800, 905, 906, 907), et configuré pour envoyer le signal analogique d'envoi ou le signal analogique de réception via l'antenne (300, 600, 800, 905, 906, 907).

3. Le circuit de connexion multi-puces tel que revendiqué dans la revendication 1 ou 2, dans lequel le signal analogique d'envoi et le signal analogique de réception sont conformes à une norme de fidélité sans fil (WiFi), et la première interface de transmission (120, 420, 430) et la seconde interface de transmission (220, 520, 720) sont des interfaces sérialiseur/désérialiseur (SERDES) prenant en charge la norme d'entrée/sortie série haute vitesse.

4. Le circuit de connexion multi-puces tel que revendiqué dans l'une quelconque des revendications précédentes, dans lequel tous les circuits analogiques requis pour prendre en charge la norme de fidélité sans fil sont disposés dans la puce radiofréquence (200, 500, 700, 902, 903, 904), et tous des circuits numériques nécessaires pour prendre en charge la norme de fidélité sans fil sont disposés dans le système sur puce (100, 400, 901).

5. Le circuit de connexion multi-puces tel que revendiqué dans l'une quelconque des revendications précédentes, dans lequel le système sur puce (100, 400, 901) comprend en outre une autre première interface de transmission (120, 420, 430), le circuit de bande de base numérique (110, 410) est connectée à une autre deuxième interface de transmission (220, 520, 720) d'une autre puce de radiofréquence (200, 500, 700, 902, 903, 904) via l'autre première interface de transmission (120, 420, 430), et l'autre puce de radiofréquence (200, 500, 700, 902, 903, 904) comporte :
l'autre seconde interface de transmission (220, 520, 720), couplée à la première interface de transmission (120, 420, 430), et émettant/recevant les données numériques; et
un autre module de chaîne de radiofréquence (200, 500, 700, 902, 903, 904), couplé à l'autre deuxième interface de transmission (220, 520, 720), et convertissant les données numériques en un autre signal analogique d'émission, ou convertissant un autre signal analogique de réception en données numériques.

6. Le circuit de connexion multi-puces tel que revendiqué dans la revendication 5, dans lequel la puce de radiofréquence (200, 500, 700, 902, 903, 904) est couplée à une antenne (300, 600, 800, 905, 906, 907), le signal analogique d'envoi et le signal analogique de réception sont transmis via l'antenne (300, 600, 800, 905, 906, 907), l'autre chaîne de radiofréquence (200, 500, 700, 902, 903, 904) est couplée à une autre antenne (300, 600, 800, 905, 906, 907), et l'autre signal analogique d'envoi et l'autre signal analogique de réception sont transmis via l'autre antenne (300, 600, 800, 905, 906, 907).
